# EUROPÄISCHE PATENTSCHRIFT

(11) **EP 0 783 004 B1**
(45) Veröffentlichungstag und Bekanntmachung des Hinweises auf die Patenterteilung: **01.09.1999**
(21) Anmeldenummer: 97100134.2
(22) Anmeldetag: 07.01.1997
(51) Int. Cl.: C08F 2/16

(54) **Verfahren zur Herstellung von wasserunlöslichen Polymerisaten**
Process for the production of water-insoluble polymers
Procédé de production de polymères insolubles dans l'eau

(30) Priorität: 08.01.1996 DE 19600405
(43) Veröffentlichungstag der Anmeldung: 09.07.1997
(73) Patentinhaber: BASF AKTIENGESELLSCHAFT, 67056 Ludwigshafen (DE)
(72) Erfinder: Schade, Christian Dr, 67061 Ludwigshafen (DE)
(74) Vertreter: Kinzebach, Werner, Dr.

(56) Entgegenhaltungen:
- EP-A- 0 597 567
- US-A- 4 148 746

## Beschreibung

Die vorliegende Erfindung betrifft ein Verfahren zur Herstellung von wasserunlöslichen Polymerisaten durch radikalische Polymerisation von ethylenisch ungesättigten Monomeren.

Wässrige Polymerisatdispersionen bzw. wasserunlösliche Polymerisate finden heutzutage breiteste Anwendung. Sie werden üblicherweise durch radikalische Emulsions- oder Suspensionspolymerisation hergestellt. Für das Gelingen der Polymerisation ist es erforderlich, Dispergiermittel, wie Schutzkolloide oder Emulgatoren, zuzusetzen. Diese beeinflussen die Monomer/Wasser- und Polymer/Wasser-Grenzfläche, bestimmen innerhalb gewisser Grenzen Form und Größe der gebildeten Teilchen und verhindern eine Koagulation der Polymerisate, indem sie eine Schutzschicht um die Polymerisatteilchen ausbilden, die eine Annäherung der Teilchen auf einen Abstand, in dem Koaleszenz eintreten kann, verhindert.

Die Dispergiermittel verbleiben jedoch in der Polymerisatdispersion und bringen auf diese Weise je nach Anwendungszweck erhebliche Nachteile mit sich. Sie können die Oberflächen- und Adhäsionseingenschaften eines aus den Polymerisaten gebildeten Filmes nachteilig beeinflussen und die Isolierbarkeit der Polymerisate aus der Dispersion erschweren. Es wurden bereits zahlreiche Versuche unternommen, weniger nachteilige Dispergiermittel zu verwenden. Insbesondere war man bestrebt, den Einsatz niedermolekularer Emulgatoren zu vermeiden.

Die US-A-4,151,143 beschreibt emulgatorfreie Polymerisate, die durch eine zweistufige Emulsionspolymerisation hergestellt werden. In der ersten Stufe wird ein herkömmliches Carboxylgruppenhaltiges Polymerisat durch Lösungs- oder Blockpolymerisation hergestellt. Das Polymerisat wird dann durch teilweise oder vollständige Neutralisation mit einem organischen Amin oder einer Base und durch Anwendung hoher Scherwirkung in Wasser dispergiert. In der zweiten Stufe wird zu dieser Dispersion ein Gemisch aus teilweise wasserlöslichen und teilweise wasserunlöslichen Monomeren zusammen mit einem Initiator gegeben. Nach dem Start erfolgt die Polymerisation der Monomeren in der Dispersion derart, daß eine Pfropfung erfolgt und eine stabile Emulsion ohne Emulgator gebildet wird.

Die EP-A-597567 beschreibt große, durch Emulsionspolymerisation erhaltene Polymerpartikel, die kugelförmig oder stäbchenförmig vorliegen können. Die Emulsionspolymerisation wird durchgeführt, indem wenigstens ein ethylenisch ungesättigtes Monomer in Anwesenheit eines Stabilisatorsystems polymerisiert wird. Bei dem Stabilisatorsystem handelt es sich um einen polymeren, amphiphilen Stabilisator, der sowohl hydrophobe als auch hydrophile Segmente umfasst. Der polymere Stabilisator wird hergestellt aus Monomeren, wie Acrylsäure, Methacrylsäure, Maleinsäure, Fumarsäure, N,N-Dimethylaminoethylmethacrylat, N,N-Dimethylaminoethylacrylat etc. Das Molekulargewicht des polymeren Stabilisators liegt im Bereich von 1000 bis 1500, wobei darauf hingewiesen wird, daß Stabilisatoren mit einem höheren Molekulargewicht nachteilig sind, weil sie bei der Neutralisation eine zu hohe Viskosität ergeben und in Wasser nicht mehr ausreichend löslich sind. Es hat sich jedoch gezeigt, daß im Stand der Technik bisher vorgeschlagenen Wege zur Vermeidung eines Emulgatorzusatzes insbesondere hinsichtlich Lagerstabilität der erhaltenen Polymerisatdispersionen und Isolierbarkeit der Polymerisate nicht zufriedenstellend sind.

Der vorliegenden Erfindung liegt daher die Aufgabe zugrunde, ein Verfahren zur Herstellung von wasserunlöslichen Polymerisaten durch radikalische Emulsionspolymerisation zur Verfügung zu stellen, das ohne Emulgatorzusatz durchführbar ist und eine lagerstabile Polymerisatdispersion ergibt. Außerdem soll das erhaltene Polymerisat leicht isolierbar sein.

Überraschenderweise wurde nun gefunden, daß diese Aufgabe gelöst wird, wenn man die Polymerisation in einer verdickten wässrigen Gelphase durchführt.

Gegenstand der vorliegenden Erfindung ist somit ein Verfahren zur Herstellung von wasserunlöslichen Polymerisaten durch radikalische Polymerisation, insbesondere Emulsionspolymerisation, von ethylenisch ungesättigten Monomeren, das dadurch gekennzeichnet ist, daß man die Polymerisation in einer wässrigen Gelphase mit einer Viskosität von mindestens 800 mPas durchführt, wobei der Gelbildner ein mittleres Molekulargewicht von mehr als 20 000 aufweist.

Gegenstand der Erfindung sind auch die nach dem Verfahren erhältlichen Polymerisatdispersionen.

### Die Gelchase

Bei dem Gelbildner kann es sich um ein Polymer natürlicher oder synthetischer Herkunft handeln. Bevorzugte Gelbildner natürlicher Herkunft sind Alginate, Pektine, Guar-Gummi, Carrageenate, Cellulose und Cellulosederivate, wie Carboxymethylcellulosen und Hydroxyethylcellulosen, und Stärke und Stärkederivate, wie oxidierte Stärke, Carboxymethylstärke und Hydroxyethylstärke.

Vorzugsweise verwendet man jedoch Carboxylgruppen-tragende Polymere synthetischer Herkunft. Es handelt sich dabei um Polymere bzw. Copolymere, die durch radikalische Polymerisation erhalten werden und vorzugsweise aufgebaut sind aus:
a) mindestens einem Carboxylgruppen tragenden Monomer,
b) gegebenenfalls mindestens einem C₁-C₃₀-Alkyl(meth)acrylat,
c) gegebenenfalls mindestens einem Vernetzer,
d) gegebenenfalls mindestens einem weiteren monoethylenisch ungesättigten Monomer, und
e) gegebenenfalls mindestens einem monoethylenisch ungesättigten Monomer, das mit Wasser bei 25°C zu mindestens 1 Gew.-% mischbar ist und mindestens 1 Alkylgruppe mit 12 oder mehr Kohlenstoffatomen aufweist.

Bei dem Monomeren (a) handelt es sich vorzugsweise um monoethylenisch ungesättigte, aliphatische C₃-C₈-Carbonsäuren, ihre Anhydride oder Mischungen aus den Carbonsäuren und Anhydriden. Geeignete Carbonsäuren sind beispielsweise Acrylsäure, Methacrylsäure, Maleinsäure, Fumarsäure, Itaconsäure oder Crotonsäure. Geeignete Anhydride sind beispielsweise Methacrylsäureanhydrid oder Maleinsäureanhydrid. Bevorzugte Monomere (a) sind Acrylsäure, Methacrylsäure, Maleinsäure und/oder Maleinsäureanhydrid.

Die Monomere (a) sind in dem Gelbildnerpolymer im allgemeinen in einer Menge im Bereich von 20 bis 100 Gew.-%, vorzugsweise 35 bis 99,95 Gew.-% und besonders bevorzugt 85 bis 99,95 Gew.-%, bezogen auf das Gesamtgewicht des Polymers, enthalten. Wenn das Monomer (a) Maleinsäureanhydrid ist, ist es bevorzugt in einer Menge von 50 bis 65 Gew.-% enthalten.

Die Monomere (a) können als freie Säure, Anhydrid oder Salz in dem Gelbildnerpolymer eingebaut vorliegen.

Bei dem Monomer (b) handelt es sich um Ester der Acrylsäure oder Methacrylsäure mit gesättigten, linearen oder verzweigten C₁-C₃₀-Alkoholen. Beispiele für derartige Ester sind Methyl-, Ethyl-, n-Propyl-, n-Butyl-, tert.-Butyl-, n-Hexyl-, n-Octyl-, n-Decyl-, n-Dodecyl-, n-Tetradecyl-, n-Hexadecyl-, n-Heptadecyl-, n-Octadecyl-, n-Nonadecyl-, n-Eicosadecyl-, n-Docosyl-, n-Tetracosyl-, 2-Ethylhexyl- oder Cyclohexylacrylat oder -methacrylat. Auch Mischungen der genannten Monomere können eingesetzt werden.

Vorzugsweise verwendet man C₁-, C₂-, C₄- und/oder C₁₂-C₂₂-Alkylacrylate oder -methacrylate.

Die Monomere (c) können in Mengen von 0,1 bis 80 Gew.-% im Gelbildnerpolymer enthalten sein. C₁₂-C₂₂-Alkylacrylate oder -methacrylate sind vorzugsweise in Mengen von 0,1 bis 10 Gew.-%, insbesondere 0,5 bis 5 Gew.-%, enthalten. C₁-, C₂-, C₄-Alkylacrylate oder -methacrylate sind vorzugsweise in Mengen von 30 bis 65 Gew.-% enthalten.

Die Vernetzer (c) enthalten mindesten zwei monoethylenisch ungesättigte Doppelbindungen im Molekül.

Geeignete Vernetzer dieser Art sind zum Beispiel Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen. Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol,1,2-Dodecandiol, 1,12-Dodecandiol, Neopentylglycol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglycolmonoester, 2,2-Bis(4-hydroxyphenyl)propan, 2,2-Bis [4-(2-hydroxypropyl)phenyl]propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiopentan-1,5-diol sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Triethoxycyanursäure, Sorbitan, Zucker wie Saccharose, Glucose, Mannose. Die mehrwertigen Alkohole können auch nach Umsetzung mit Ethylenoxid oder Propylenoxid als die entsprechenden Ethoxylate bzw. Propoxylate eingesetzt werden.

Weitere geeignete Vernetzer sind die Vinylester oder die Ester einwertiger, ungesättigter Alkohole mit ethylenisch ungesättigten C₃- bis C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellitsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z.B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 - 20 000. Als Vernetzer sind ferner geeignet die Acrylsäureamide oder Methacrylsäureamide von mindestens zweiwertigen Aminen. Solche Amine sind zum Beispiel 1,2-Diaminomethan, 1,2-Diaminoethan, 1,3-Diaminopropan, 1,4-Diaminobutan, 1,6-Diaminohexan, 1,12-Didecandiamin, Piperazin, Diethylentriamin oder Isophorondiamin. Ebenfalls geeignet sind die Amide aus Allylamin und ungesättigten Carbonsäuren wie Acrylsäure, Methacrylsäure, Itaconsäure, Maleinsäure oder mindestens zweiwertigen Carbonsäuren, wie sie oben beschrieben wurden.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid.

Weitere geeignete Vernetzer sind Divinyldioxan, Diallylphosphat, Triallylphosphat, Triallyltriazintrion, Diallylamin, Triallylamin, Tetraallylsilan, Tetravinylsilan, Hexaallyltrimethylentrisulfon, Butadien oder Isopren.

Bevorzugte Vernetzer sind (Meth)acrylester von C₂-C₆-Diolen, Allylether von mehrwertigen Alkoholen, wie z.B. von Trimethylolpropan, Pentaerythrit, Saccharose oder Sorbit mit mehr als einer Allyletherfunktion im Molekül, Methacrylsäureester von ungesättigten C₃-C₂₂-Alkoholen, Trivinylcyclohexan und/oder nicht-konjugierte C₆-C₁₄-Alkadiene sowie Divinylglycol. Die Vernetzer können in Mengen von 0,05 bis 10 Gew.-%, vorzugsweise 0,05 bis 5 Gew.-% und besonders bevorzugt 0,1 bis 3 Gew.-% eingesetzt werden.

Bei den monoethylenisch ungesättigten Monomeren (d) handelt es sich vorzugsweise um folgende Verbindungen:
a) N-Vinylverbindungen der Formel 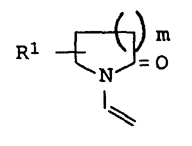 worin R¹ für ein Wasserstoffatom oder eine C₁-C₁₂-Alkylgruppe steht und m für 1, 2 oder 3 steht.
   Beispiele für derartige Verbindungen sind N-Vinylpyrrolidon und N-Vinylcaprolactam.
b) N-Vinylimidazol, das gegebenenfalls durch eine C₁-C₁₂-Alkylgruppe substituiert sein kann, und 1-Vinyl-3-alkyl-imidazolium-Salze mit 1 bis 30 C-Atomen in der Alkylkette.
c) Verbindungen der Formel 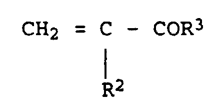
   worin R² für H oder CH₃ steht; R³ für OR⁴NR⁵R^{6,} NHR⁴NR⁵R⁶ oder NR⁵R⁶ steht, wobei R⁴ für C₂-C₁₂-Alkylen steht und R⁵ oder R⁶, die gleich oder verschieden sein können, für ein Wasserstoffatom oder C₁-C₁₂-Alkyl stehen sowie die quaternären Ammoniumsalze davon.
   Beispiele für derartige Verbindungen sind Diethyl- und Dimethylaminoethyl(meth)acrylamid und -(meth)acrylat, Acrylamid, Methacrylamid, N-N-Dimethylacrylamid, N-tert.-Butylacrylamid, N-tert.-Octylacrylamid, N-Dodecylacrylamid oder N-Methylundecylacrylamid;
d) Vinylester von gesättigten C₁- bis C₃₀-Carbonsäuren, wie Vinylacetat, Vinylpropionat, Vinylneononaoat, Vinylneodecanoat oder Vinyllaurat;
e) Hydroxyalkylmono(meth)acrylester mit 2 bis 6 Kohlenstoffatomen in der Alkylengruppe, wie Hydroxyethylmonomethacrylester und -acrylester;
f) (Meth)acrylester von mit 2 bis 50 Ethylenoxideinheiten umgesetzten C₁-C₂₂-Alkoholen;
g) C₁-C₂₂-Alkylvinylethern, wie Vinylmethylether oder Vinylethylether;
h) Acrylamidopropansulfonsäure, Styrolsulfonsäure, Sulfoethylmethacrylat oder ihre Salze;
i) C₄-C₃₀-Alkene mit endständiger Doppelbindung;
sowie Styrol, Acrylnitril, Methylvinylketon, Vinylchlorid oder Vinylidenchlorid oder beliebige Mischungen der genannten Monomere.

Bevorzugt sind Acrylamid, N-Vinylpyrrolidon, Vinylacetat, Vinylmethylether, Vinylethylether, Isobuten, Diisobuten oder C₁₂-C₂₂-Alkene wie 1-Octadecen, 1-Hexadecen oder 1-Dodecen. Ganz besonders bevorzugt enthaltene Monomere (d) sind Acrylamid, N-Vinylpyrrolidon oder Vinylmethylether.

Die Monomere (d) können in einer Menge von bis zu 70 Gew.-%, vorzugsweise bis zu 10 Gew.-%, besonders bevorzugt bis zu 5 Gew.-% eingesetzt werden. Vinylmethylether, Vinylethylether, Isobuten oder Diisobuten sind besonders bevorzugt in Mengen von 25 bis 50 Gew.-% enthalten. Acrylamid und N-Vinylpyrrolidon sind bevorzugt in Mengen von 15 bis 60 Gew.-% enthalten.

Bei den monoethylenisch ungesättigten Monomeren (e) handelt es sich vorzugsweise um Verbindungen der Formel 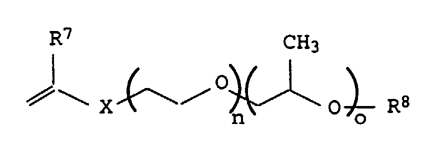 worin
- R⁷: für H oder CH₃ steht;
- x: für -O-, -COO-, -CONH- oder CH₂- steht;
- R⁸: für C₁₂-C₃₀-Alkyl steht;
- n: für 1 bis 100, und
- o: für 0 - 100 steht.

Besonders bevorzugt sind Monomere der obigen Formel, worin
- R⁷: für H oder CH₃ steht;
- X: für -O-, -COO- oder -CH₂- steht;
- R⁸: für C₁₂-C₂₂-Alkyl steht;
- n: für 1 - 100 steht und
- o: für 0 steht.

Weitere geeignete Monomere (e) sind beschrieben in EP-A-632 063, EP-A-296 436, US-A-4 514 552, US-A-4 916 183, US-A-5 013 787, EP-A-335 624, EP-A-413 953, EP-A-446 621, US-A-4 421 902, EP-A-192 724, EP-A-216 479, EP-A-170 025 und EP-A-172 723. Auf den Inhalt dieser Publikationen wird hiermit in vollem Umfang Bezug genommen.

Die Monomere (e) können im Gelbildnerpolymer vorzugsweise in einer Menge von 0,1 bis 25 Gew.-%, insbesondere 0,5 bis 15 Gew.-% und besonders bevorzugt 2 bis 10 Gew.-% enthalten sein.

Das gelbildende Polymer ist insbesondere aufgebaut gemäß einer der folgenden bevorzugten Ausführungsformen, wobei die Mengen jeweils in Gew.-% angegeben sind:
(1)
   20 bis 80 % mindestens eines Carboxylgruppen-tragenden Monomers (a);
   20 bis 80 % mindestens eines Monomers (b);
   0 % Vernetzer;
   0 bis 30 % mindestens eines Monomers (d); und
   0,1 bis 15 % mindestens eines Monomers (e).
(2)
   30 bis 100 % mindestens eines Monomers (a);
   0 bis 20 % mindestens eines Monomers (b);
   0 bis 10 % mindestens eines Vernetzers;
   0 bis 70 % mindestens eines Monomers (d); und
   0 % Monomer (e).
(3)
   20 bis 80 % Acrylsäure, Methacrylsäure, Itaconsäure und/oder Maleinsäure;
   20 bis 80 % eines C₁-C₈-Alkyl(meth)acrylats;
   0 bis 10 % mindestens eines Vernetzers;
   0 bis 30 % mindestens eines Monomers (b); und
   0,1 bis 15 % eines Monomers der Formel 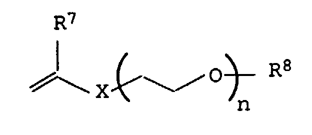 worin
      - R⁷: für H oder CH₃ steht;
      - x: für -O-, -COO- oder -CH₂- steht;
      - R⁸: für C₁₂-C₂₂-Alkyl steht und
      - n: für 1 bis 100 steht.
   (4)
      80 bis 99,9 % Acrylsäure, Methacrylsäure und/oder Maleinsäureanhydrid;
      0,05 bis 10 % mindestens eines C₈-C₂₂-Alkyl(meth)acrylat;
      0,05 bis 5 % mindestens eines Vernetzers; und
      0 bis 10 % mindestens eines weiteren Monomers (d).
   (5)
      90 bis 99,4 % Acrylsäure, Methacrylsäure und/oder Maleinsäureanhydrid;
      0,5 bis 5 % mindestens eines C₈-C₂₂-Alkyl(meth)acrylats;
      0,1 bis 5 % mindestens eines Vernetzers; und
      0 bis 5 % mindestens eines Monomers (b).
   (6)
      95 bis 99,95 % Acrylsäure, Methacrylsäure und/oder Maleinsäureanhydrid; und
      0,05 bis 5 % mindestens eines Vernetzers.
   (7)
      40 bis 65 % Maleinsäureanhydrid;
      35 bis 60 % mindestens eines C₁-C₂₂-Alkylvinylethers und/oder eines C₆-C₃₀-Alk-1-ens und/oder Isobuten;
      0 bis 5 % mindestens eines Vernetzers; und
      0 bis 10 % mindestens eines Monomers (d).
   (8)
      40 bis 85 % (Meth)Acrylsäure;
      15 bis 60 % mindestens eines N-Vinyllactams und/oder eines Acrylamids;
      0 bis 5 % mindestens eines Vernetzers;
      0 bis 10 % weiterer Monomere (d).

Das Molekulargewicht des Gelbildners ist größer als 20 000, vorzugsweise größer als 50 000 und insbesondere größer als 100 000.

Die Herstellung der Gelbildnerpolymere kann nach verschiedenen Verfahren erfolgen, beispielsweise durch Fällungspolymerisation, Lösungspolymerisation, Emulsionspolymerisation oder umgekehrte Emulsionspolymerisation. Sie können auch durch polymeranaloge Umsetzung aus anderen Polymeren erhalten werden. Vorzugsweise stellt man die Polymere her durch Fällungspolymerisation in organischen Lösungsmitteln, Lösungsmittelgemischen oder in überkritischem CO₂, durch Emulsionscopolymerisation in Wasser oder durch umgekehrte Emulsions- oder Suspensionspolymerisation in Gemischen aus Wasser und einer mit Wasser nicht mischbaren Flüssigkeit.

Geeignete Gelbildnerpolymere sind im Handel erhältlich, beispielsweise Carbopol®, Synthalen®, Stabylen®, Aqupec®, Stabyleze®, Hivis®, Pemulen®, Lutexal®, Sterocoll®, Latecoll®, Rohagit®, Sanwet®, Salcare®, Antil® oder Acrysol®.

### Die ethylenisch ungesättigten Monomere

Bei den in der Gelphase zu polymerisierenden ethylenisch ungesättigten Monomeren handelt es sich um solche, die üblicherweise bei Emulsions- oder Suspensionspolymerisationen eingesetzt werden. Es handelt sich also um im wesentlichen wasserunlösliche Monomere. Sie können alleine oder im Gemisch mit anderen Monomeren eingesetzt werden. Der Hauptanteil des Gemisches besteht dann aus dem im wesentlichen wasserunlöslichen Monomeren. Daneben können kleinere Mengen wasserlösliche Comonomere vorhanden sein.

Geeignete im wesentlichen wasserunlösliche Monomere sind insbesondere monoethylenisch ungesättigte Monomere wie Olefine, z.B. Ethylen; vinylaromatische Monomere wie Styrol, α-Methylstyrol, o-Chlorstyrol oder Vinyltoluole; Ester aus Vinylalkohol und 1 bis 22 C-Atome aufweisenden Monocarbonsäuren wie Vinylacetat, Vinylpropionat, Vinyl-n-butyrat, Vinyllaurat und Vinylstearat; Ester aus 3 bis 6 C-Atome aufweisenden α,β-monoethylenisch ungesättigten Mono- und Dicarbonsäuren, wie Acrylsäure, Methacrylsäure, Maleinsäure, Fumarsäure und Itaconsäure, mit im allgemeinen 1 bis 30, vorzugsweise 1 bis 18 und insbesondere 1 bis 12 C-Atome aufweisenden Alkanolen, z.B. Acrylsäure- und Methacrylsäuremethylester, -ethylester, -n-butylester, -iso-butylester und -2-ethylhexylester, Maleinsäuredimethylester oder Maleinsäure-di-n-butylester; Nitrile α,β-monoethylenisch ungesättigter Carbonsäuren wie Acrylnitril; C₄-₈-konjugierte Diene wie 1,3-Butadien und Isopren; chlorierte und fluorierte Alkene mit 1 bis 6 C-Atomen, wie Vinylchlorid oder Vinylidenchlorid und N-C₄-C₃₀-Alkyl(meth)acrylamide, wie N-n-Butylacrylamid etc.

Wasserlösliche Comonomere sind insbesondere α,β-monoethylenisch ungesättigte Carbonsäuren mit 3 bis 6 C-Atomen, wie Acrylsäure, Methacrylsäure, Crotonsäure, Maleinsäure; Hydroxyalkyl(meth)acrylate, wie Hydroxyethyl(meth)acrylat; Dialkylaminoalkyl(meth)acrylate, wie Dimethylaminoethyl(meth)acrylat; Dialkylaminoalkyl(meth)acrylamide, wie Dimethylaminoalkyl(meth)acrylamide; Vinylpyrrolidon; Vinylcaprolactam; Vinylimidazol etc.

Gegebenenfalls können Vernetzer mit eingesetzt werden. Geeignete Vernetzer wurden bereits oben erwähnt.

### Durchführung der Polymerisation

Die Polymerisation wird in einer wässrigen Gelphase durchgeführt, die durch Anwendung der oben beschriebenen Gelbildner gebildet wird. Man arbeitet in einer Gelphase mit einer Viskosität von mindestens 800 mPas, vorzugsweise mindestens 1000, insbesondere mindestens 1500 mPas und besonders bevorzugt mindestens 2000 mPas (gemessen bei 25°C mit einem Haake-Handviskosimeter VT-02.). In vielen Fällen kann bei einer Viskosität von mindestens 5000 mPas und sogar mindestens 10 000 oder 25 000 mPas gearbeitet werden.

Der Gelbildner wird dabei im allgemeinen in einer Menge von 0,05 bis 10 Gew.-%, vorzugsweise 0,1 bis 5 Gew.-% und besonders bevorzugt 0,1 bis 2 Gew.-%, berechnet auf Basis des nicht-ionisierten Gelbildners und bezogen auf das Gesamtgewicht der wässrigen Phase, eingesetzt.

Im allgemeinen wird der Gelbildner in der wässrigen Phase in Salzform verwendet. Die Salzform kann bereits vorliegen oder sie kann nachträglich durch Zugabe einer Base zu der wässrigen Phase erzeugt werden. Geeignete Basen für die Bildung der Salzform vor oder nach Zugabe des Gelbildners in die wässrige Phase sind beispielsweise anorganische Basen, wie Lithium-, Natrium- oder Kaliumhydroxyd, Natrium- oder Kaliumcarbonat, Ammoniak, Pyridinverbindungen, Amidinverbindungen oder organische Amine, wie Monoethanolamin, Diethanolamin, Triethanolamin, Dimethylethanolamin, Methyldiethanolamin, Triethylamin, 2-Amino-2-methyl-1-propanol etc.

Die Gelphase kann auch weitere übliche Additive enthalten, beispielsweise Emulgatoren, Schutzkolloide, Schaumstabilisatoren, Konservierungsmittel, organische Lösungsmittel oder anorganische Salze. Vorzugsweise enthält die Gelphase jedoch keine Emulgatoren oder Schutzkolloide.

Die Polymerisation wird radikalisch durchgeführt. Die Initiierung der Polymerisation erfolgt in üblicher Weise mit Hilfe von Initiatoren, die in der Lage sind, eine radikalische wässrige Polymerisation, insbesondere Emulsionspolymerisation, auszulösen. Es kann sich dabei um Peroxide, z.B. Alkalimetallperoxodisulfate, oder um Azoverbindungen handeln. Geeignet sind auch Redoxinitiatoren, d.h. kombinierte Systeme aus wenigstens einem Peroxid und/ oder Hydroperoxid, z.B. tert.-Butylhydroperoxid und das Natriummetallsalz der Hydroxymethansulfinsäure oder Wasserstoffperoxid und Ascorbinsäure, und insbesondere Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumdisulfit und anstelle von Wasserstoffperoxid tert-Butylhydroperoxid oder Alkalimetallperoxodisulfate und/oder Ammoniumperoxodisulfat angewendet werden. Auch Photoinitiatoren sind geeignet. Außerdem kann die Polymerisation durch ionisierende Strahlung oder elektrochemisch eingeleitet werden. Die Menge an Initiator liegt im allgemeinen im Bereich von 0,1 bis 5 Gew.-%, bezogen auf das Gesamtgewicht der zu polymerisierenden Polymere.

Das Molekulargewicht der Polymerisate kann gewünschtenfalls in üblicher Weise durch Zugabe von Reglern zur polymerisierenden Mischung erniedrigt werden. Geeignete Regler sind beispielsweise Mercaptane.

Die Polymerisation wird üblicherweise unter Inertgasatmosphäre durchgeführt. Sie kann beispielsweise so erfolgen, daß man alle Komponenten, die während der Polymerisation anwesend sind, in einem Polymerisationsgefäß vorlegt, die Reaktion startet und das Reaktionsgemisch gegebenenfalls kühlt, um die Polymerisationstemperatur zu kontrollieren. Man kann auch so vorgehen, daß man nur einzelne oder einen Teil der Komponenten vorlegt, die Polymerisation startet und den Rest der Komponenten einzeln oder zusammen, kontinuierlich oder stufenweise in gegebenenfalls unterschiedlichen Intervallen, zudosiert. Man kann auch so verfahren, daß man die Monomeren und den Polymerisationsinitiator in separaten Zuläufen in das Polymerisationsgefäß stufenweise oder kontinuierlich einbringt. Dabei können auch unterschiedliche Monomere oder Monomermischungen nacheinander zum Reaktionsgemisch gegeben werden.

Die Temperatur während der Polymerisation liegt im allgemeinen im Bereich von 40 bis 160°C, vorzugsweise 50 bis 120°C. Sie kann sich während der Reaktion verändern. Die Polymerisation wird vorzugsweise unter Atmosphärendruck durchgeführt, sie kann jedoch auch unter vermindertem oder erhöhtem Druck erfolgen. Wenn die Polymerisationstemperatur oberhalb des Siedepunktes einer Komponente liegt, wird sie in druckdichten Apparaturen bei einem Druck von bis zu 20 bar durchgeführt.

Die Teilchengröße des gebildeten Polymerisats liegt im allgemeinen im Bereich von 50 nm bis 20 µm. Ein Teil der Partikel kann in lockeren Assoziaten vorliegen, die leicht zerteilt werden können. Im allgemeinen ist der Feinanteil jedoch sehr hoch.

Die Teilchengröße der Polymerisate kann durch die Bauart und Betriebsweise der zur Anwendung kommenden Rühraggregate sowie durch Additive beeinfluß werden. Bei Anwendung üblicher Rührwerke oder Mischsysteme liegt die Teilchengröße im allgemeinen im obengenannten Bereich.

Im Anschluß an den Polymerisationsprozeß können die Polymerisate einer physikalischen oder chemischen Nachbehandlung, insbesondere zur Entfernung flüchtiger Bestandteile, wie z.B. Restmonomerer, unterzogen werden. Derartige Methoden sind beispielsweise Wasserdampfdestillation, Strippen mit Dampf und/oder Stickstoff, Einengen, oxidative Behandlung oder Zusatz von Polymerisationsinitiatoren.

Die erhaltenen Polymerisatdispersionen können als solche verwendet werden. Sie haben sich als außerordentlich lagerstabil erwiesen.

Die erhaltenen Polymerisate können auch isoliert werden, beispielsweise durch Sprüh- oder Walzentrocknung. Ein besonderer Vorteil ist darin zu sehen, daß die Polymerisate aus der Dispersion durch Erniedrigung der Viskosität in einfacher Weise ausgefällt werden können. Dies kann durch Zusatz einer geringen Menge eines Elektrolyten, eines organischen, wassermischbaren Lösungsmittels oder durch Verdünnen mit Wasser erfolgen. Die ausgewählten Polymerisate können dann isoliert, gegebenenfalls getrocknet und weiterverarbeitet werden. Zur Ausfällung geeignete Elektrolyte sind beispielsweise die Natrium- und Kaliumsalze von Mineralsäuren, insbesondere Natriumchlorid und Natriumsulfat. Geeignet sind aber auch Magnesium- oder Calciumsalze, beispielsweise Magnesiumsulfat oder Calciumformiat. Geeignete organische, wassermischbare Lösungsmittel sind insbesondere C₁-C₄-Alkohole, Diole, wasserlösliche Carbonsäuren oder Aceton.

Die erfindungsgemäß erhältlichen Polymerisate bzw. Polymerisatdispersionen finden breite Anwendung. Beispielsweise können sie als Klebstoffe, Hilfsmittel für die Bauindustrie (Zusatz zu Zement), als Bindemittel, z.B. für Anstrichfarben oder Massen zum Beschichten von Leder, als Schlagzähmodifier in polymeren Werkstoffen oder als Papierhilfsmittel Anwendung finden.

Die nachfolgenden Beispiele erläutern die Erfindung, ohne sie einzuschränken. Dabei wurden die folgenden Gelbildnerpolymere verwendet:
- Polymer 1: Coplymer aus Acrylsäure (> 95 %), Stearylmethacrylat und Pentaerytrittriallylether. Vertrieben unter dem Handelsnamen Pemulen TR 1® von Fa. B.F.Goodrich.
- Polymer 2: Copolymer aus Acrylsäure (> 94 %), Stearylmethacrylat und Pentaerythrittriallylether. Vertrieben unter dem Handelsnamen Pemulen TR 2® von Fa. B.F.Goodrich.
- Polymer 3: Schwach vernetzte Polyacrylsäure, vertrieben unter dem Handelsnamen Carbopol® 940 von der Fa. B.F.Goodrich.
- Polymer 4: Copolymer aus Ethylacrylat, Methacrylsäure und einem Methacrylsäureester eines mit 25 Ethylenoxideinheiten umgesetzten Stearylalkohols im Gew.-Verhältnis 55/40/5 mit einem K-Wert von 95 (0,1 %ig in THF).
- Polymer 5: Schwach vernetzes Polyacrylsäure-Natriumsalz, vertrieben von der BASF AG unter dem Handelsnamen Lutexal® P.
- Polymer 6: Terpolymer aus Maleinsäureanhydrid und Methylvinylether (im Gewichtsverhältnis von ca. 60/40) und 1,9-Decadien, vertrieben unter dem Handelsnamen Stabileze 06 von Fa. ISP.

Alle Viskositäten wurden bei 25°C mit einem Haake Handviskosimeter VT 02 bestimmt.

### Beispiel 1

In einer 21 Rührapparatur wurde ein Gel aus 600 ml Wasser, 1,8 g Polymer 1, 0,8 g Natriumhydroxyd gebildet. Die Viskosität der Wasserphase war 3 200 mPas. Nach Zusatz von 0,3 g Natriumpersulfat wurde die Mischung unter Rühren mit einem Ankerrührer bei 200 Umdrehungen/min im Stickstoffstrom auf 80°C aufgewärmt. Bei dieser Temperatur ließ man 142,5 g Ethylacrylat und 7,5 g Methacrylsäure während 3 h zulaufen. Anschließend wurde die Mischung weitere 3 h bei dieser Temperatur gehalten.
Man erhielt eine weiße Polymerdispersion mit einem Feststoffgehalt von 19,5 %. Die Viskosität der Dispersion betrug 7 Pa.s.
Auch nach 9 Monaten zeigte sich keine Tendenz zur Phasentrennung. Nach Zusatz einer Lösung von 0,5 g NaCl in 50 ml Wasser zu 50 ml der Dispersion koagulierte diese in feinen Flocken, die sich gut isolieren ließen.

Nach dem Einrühren von 10 ml der Dispersion in 100 ml Wasser setzte sich das Polymer als feinteiliger Niederschlag langsam ab.

### Beispiel 2

Eine analoge Umsetzung erfolgte mit 1,8 g Polymer 2 anstelle von Polymer 1. Die Viskosität der Wasserphase zwar 1400 mPas. Man erhielt eine weiße Dispersion mit einem Feststoffgehalt von 19,7 % und einer Viskosität von 7 Pa.s. Auch nach 9 Monaten zeigte sich keine Tendenz zur Phasentrennung.

### Beispiel 3

Eine analoge Umsetzung erfolgte mit 1,8 g Polymer 3 anstelle von Polymer 1. Die Viskosität der Wasserphase war 13000 mPas. Man erhielt eine weiße Dispersion mit einem Feststoffgehalt von 19,9 % und einer Viskosität von 1,7 Pa.s. Auch nach 9 Monaten zeigte sich keine Tendenz zur Phasentrennung.

### Beispiel 4

Eine analoge Umsetzung erfolgte mit 4 g Polymer 4 anstelle von Polymer 1. Die Viskosität der Wasserphase war 1700 mPas. Man erhielt eine weiße Dispersion mit einem Feststoffgehalt von 19,6 % und einer Viskosität von 1,7 Pa.s. Auch nach 9 Monaten zeigte sich keine Tendenz zur Phasentrennung.
Nach Zusatz von 10 ml Ethanol zu 50 ml der Dispersion setzte sich das Polymer langsam in feinen Teilchen ab.

### Beispiel 5

Eine analoge Umsetzung erfolgte mit 3 g Polymer 5 anstelle von Polymer 1. Die Viskosität der Wasserphase war 11000 mPas. Es wurde keine weitere Base (NaOH) zugegeben. Man erhielt eine weiße Dispersion mit einem Feststoffgehalt von 19,6 % und einer Viskosität von 1,7 Pa.s. Auch nach 9 Monaten zeigte sich keine Tendenz zur Phasentrennung.

### Beispiel 6

Eine analoge Umsetzung erfolgte mit 1,8 g Polymer 6 anstelle von Polymer 1. Die Viskosität der Wasserphase betrug 17000 mPas. Man erhielt eine weiße Dispersion mit einem Feststoffgehalt von 20,1 % und einer Viskosität von 8 Pa.s. Auch nach längerem Stehen zeigte sich keine Tendenz zur Phasentrennung.

### Beispiel 7

Eine analoge Umsetzung erfolgte mit 150 g Ethylacrylat anstelle der in Beispiel 1 eingesetzten Monomere. Man erhielt eine weiße Dispersion mit einem Feststoffgehalt von 20,3 % und einer Viskosität von 9,5 Pa.s. Auch nach 9 Monaten zeigte sich keine Tendenz zur Phasentrennung.

### Beispiel 8

Eine analoge Umsetzung erfolgte mit 150 g Methylmethacrylat anstelle der in Beispiel 1 eingesetzten Monomere. Man erhielt eine weiße Dispersion mit einem Feststoffgehalt von 21,0 % und einer Viskosität von 25 Pa.s. Auch nach 9 Monaten zeigte sich keine Tendenz zur Phasentrennung.

### Beispiel 9

Eine analoge Umsetzung erfolgte mit 150 g Styrol anstelle der in Beispiel 1 eingesetzten Monomere, wobei die Monomerphase während 6 h zur Reaktionsmischung zugegeben wurde. Man erhielt eine weiße Dispersion mit einem Feststoffgehalt von 19,8 % und einer Viskosität von 6 Pa.s.

### Beispiel 10

Eine analoge Umsetzung erfolgte mit 150 g n-Butylacrylat anstelle der in Beispiel 1 eingesetzten Monomere. Man erhielt eine stabile, weiße Dispersion mit einem Feststoffgehalt von 20,2 % und einer Viskosität von 4 Pa.s.

## Patentansprüche

1. Verfahren zur Herstellung von wasserunlöslichen Polymerisaten durch radikalische Polymerisation von ethylenisch ungesättigten Monomeren, dadurch gekennzeichnet, daß man die Polymerisation in einer wässrigen Gelphase mit einer Viskosität von mindestens 800 mPas durchführt, wobei der Gelbildner ein mittleres Molekulargewicht von mehr als 20 000 aufweist.

2. Verfahren nach Anspruch 1, dadurch gekennzeichnet, daß man als Gelbildner ein Carboxylgruppen-tragendes Polymer synthetischer Herkunft verwendet.

3. Verfahren nach Anspruch 2, dadurch gekennzeichnet, daß man als Gelbildner ein Carboxylgruppen-tragendes Polymer verwendet, das Einheiten umfaßt, die ausgewählt sind unter monoethylenisch ungesättigten, aliphatischen C₃-C₈-Carbonsäuren, den Anhydriden davon oder Gemischen aus den Carbonsäuren und Anhydriden.

4. Verfahren nach Anspruch 3, dadurch gekennzeichnet, daß man als Gelbildner ein Carboxylgruppen-tragendes Polymer verwendet, das Einheiten umfaßt, die ausgewählt sind unter Acrylsäure, Methacrylsäure, Maleinsäure, Fumarsäure, Itaconsäure, Crotonsäure, Methacryl säureanhydrid oder Maleinsäureanhydrid.

5. Verfahren nach einem der Ansprüche 2 bis 4, dadurch gekennzeichnet, daß man als Gelbildner ein Carbonsäuregruppen-tragendes Polymer verwendet, das, jeweils auf das Gewicht bezogen, aufgebaut ist aus
a) 20 bis 100 % mindestens eines Carboxylgruppen-tragenden Monomers;
b) 0 bis 80 % mindestens eines C₁-C₃₀-Alkyl(meth)acrylats;
c) 0 bis 10 % mindestens eines Vernetzers;
d) 0 bis 70 % mindestens eines weiteren monoethylenisch ungesättigten Monomers; und
e) 0 bis 25 % mindestens eines monoethylenisch ungesättigten Monomers, das mit Wasser bei 25°C zu mindestens einem Gew.-% mischbar ist und mindestens eine Alkylgruppe mit 12 oder mehr Kohlenstoffatomen aufweist.

6. Verfahren nach Anspruch 5, dadurch gekennzeichnet, daß das Carboxylgruppen-tragende Polymer aufgebaut ist aus
a) 20 bis 80 % mindestens eines Carboxylgruppen tragenden Monomers;
b) 20 bis 80 % mindestens eines C₁-C₃₀-Alkyl(meth)acrylats;
c) 0 bis 1 % mindestens eines Vernetzers;
d) 0 bis 30 % mindestens eines weiteren monoethylenisch ungesättigten Monomers; und
e) 0,5 bis 15 % mindestens eines monoethylenisch ungesättigten Monomers, das mit Wasser bei 25°C zu mindestens einem Gew.-% mischbar ist und mindestens eine Alkylgruppe mit 12 oder mehr Kohlenstoffatomen aufweist.

7. Verfahren nach Anspruch 6, dadurch gekennzeichnet, daß man als monoethylenisch ungesättigtes Monomer (e) eine Verbindung der Formel 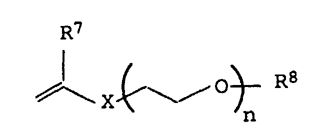 verwendet, worin
R⁷ für H oder CH₃ steht,
x für -O-, -COO-, -CONH- oder -CH₂- steht;
R⁸ für C₁₂-C₂₂-Alkyl steht; und
n für 1 bis 100 steht.

8. Verfahren nach Anspruch 5, dadurch gekennzeichnet, daß man als Gelbildner ein Carboxylgruppen-tragendes Polymer verwendet, das aufgebaut ist aus
a) 30 bis 100 % mindestens eines Carboxylgruppen-tragenden Monomers;
b) 0 bis 20 % mindesten eines C₁-C₃₀-Alkyl(meth)acrylats;
c) 0 bis 10 % mindestens eines Vernetzers;
d) 0 bis 70 % mindestens eines weiteren monoethylenisch ungesättigten Monomers.

9. Verfahren nach Anspruch 8, dadurch gekennzeichnet, daß man als Gelbildner ein Carboxylgruppen-tragendes Polymer verwendet, das aufgebaut ist aus
a) 80 bis 99,9 % Acrylsäure, Methacrylsäure und/oder Maleinsäureanhydrid;
b) 0,05 bis 10 % mindestens eins C₈-C₂₂-Alkyl(meth)acrylats;
c) 0,05 bis 5 % mindestens eines Vernetzers;
d) 0 bis 10 % mindestens eines weiteren monoethylenisch ungesättigten Monomers.

10. Verfahren nach Anspruch 9, dadurch gekennzeichnet, daß man als Gelbildner ein Carboxylgruppen-tragendes Polymer verwendet, das aufgebaut ist aus
a) 90 bis 99,4 % Acrylsäure, Methacrylsäure und/oder Maleinsäureanhydrid;
b) 0,5 bis 5 % eines C₈-C₂₂-Alkyl(meth)acrylats;
c) 0,1 bis 5 % mindestens eines Vernetzers; und
d) 0 bis 5 % mindestens eines weiteren monoethylenisch ungesättigten Monomers.

11. Verfahren nach Anspruch 5, dadurch gekennzeichnet, daß man als Gelbildner ein Carboxylgruppen-tragendes Polymer verwendet, das aufgebaut ist aus
a) 95 bis 99,95 % Acrylsäure, Methacrylsäure und/oder Maleinsäureanhydrid und
b) 0,05 bis 5 % mindestens eines Vernetzers.

12. Verfahren nach Anspruch 5, dadurch gekennzeichnet, daß man als Gelbildner ein Carboxylgruppen-tragendes Polymer verwendet, das aufgebaut ist aus
a) 40 bis 65 % Maleinsäureanhydrid,
b) 35 bis 60 % mindestens eines C₁-C₂₂-Alkylvinylethers und/ oder eines C₆-C₃₀-Alk-1-ens und/oder Isobuten,
c) 0 bis 5 % mindestens eines Vernetzers, und
d) 0 bis 10 % mindestens eines weiteren monoethylenisch ungesättigten Monomers.

13. Verfahren nach Anspruch 5, dadurch gekennzeichnet, daß man als Gelbildner ein Carboxylgruppen-tragendes Polymer verwendet, das aufgebaut ist aus
a) 40 bis 85 % (Meth)Acrylsäure,
b) 15 bis 60 % mindestens eines N-Vinyllactams und/oder eines Acrylamids,
c) 0 bis 5 % mindestens eines Vernetzers, und
d) 0 bis 10 % mindestens eines weiteren monoethylenisch ungesättigten Monomers.

14. Verfahren nach einem der Ansprüche 1 bis 13, dadurch gekennzeichnet, daß man ein Carboxylgruppen-tragendes Polymer verwendet, dessen Carboxylgruppen zumindest teilweise als Carboxylatgruppen vorliegen.

15. Verfahren nach einem der vorhergehenden Ansprüche, dadurch gekennzeichnet, daß man den Gelbildner in einer Menge von 0,05 bis 10 Gew.-%, insbesondere 0,1 bis 5 Gew.-% und besonders bevorzugt 0,1 bis 2 Gew.-%, bezogen auf das Gesamtgewicht der Gelphase, verwendet.

16. Verfahren nach einem der vorhergehenden Ansprüche, dadurch gekennzeichnet, daß die Viskosität der Gelphase mindestens 1000 m Pas und insbesondere mindestens 1500 mPas. beträgt.

17. Verfahren nach einem der vorhergehenden Ansprüche, dadurch gekennzeichnet, daß man das erhaltene Polymerisat durch Zugabe von Wasser oder eines mit Wasser mischbaren Lösungsmittels oder eines Elektrolyten ausfällt.

18. Polymerisatdispersion, erhältlich nach einem Verfahren nach einem der vorhergehenden Ansprüche.

## Claims

1. A process for the preparation of water-insoluble polymers by free radical polymerization of ethylenically unsaturated monomers, wherein the polymerization is carried out in an aqueous gel phase having a viscosity of at least 800 mPa.s, the gel former having an average molecular weight of more than 20,000.

2. A process as claimed in claim 1, wherein the gel former used is a carboxyl-carrying polymer of synthetic origin.

3. A process as claimed in claim 2, wherein the gel former used is a carboxyl-carrying polymer which comprises units which are selected from the group consisting of monoethylenically unsaturated, aliphatic C₃-C₈-carboxylic acids, the anhydrides thereof and mixtures of the carboxylic acids and anhydrides.

4. A process as claimed in claim 3, wherein the gel former used is a carboxyl-carrying polymer which comprises units which are selected from the group consisting of acrylic acid, methacrylic acid, maleic acid, fumaric acid, itaconic acid, crotonic acid, methacrylic anhydride and maleic anhydride.

5. A process as claimed in any of claims 2 to 4, wherein the gel former used is a carboxyl-carrying polymer which is composed of
a) from 20 to 100% by weight of at least one carboxyl-carrying monomer;
b) from 0 to 80% by weight of at least one C₁-C₃₀-alkyl (meth)acrylate;
c) from 0 to 10% by weight of at least one crosslinking agent;
d) from 0 to 70% by weight of at least one further monoethylenically unsaturated monomer and
e) from 0 to 25% by weight of at least one monoethylenically unsaturated monomer which has a water miscibility of at least 1% by weight at 25°C and has at least one alkyl group of 12 or more carbon atoms.

6. A process as claimed in claim 5, wherein the carboxylcarrying polymer is composed of
a) from 20 to 80% of at least one carboxyl-carrying monomer;
b) from 20 to 80% of at least one C₁-C₃₀-alkyl (meth)acrylate;
c) from 0 to 1% of at least one crosslinking agent;
d) from 0 to 30% of at least one further monoethylenically unsaturated monomer and
e) from 0.5 to 15% of at least one monoethylenically unsaturated monomer which has a water miscibility of at least 1% by weight at 25°C and has at least one alkyl group of 12 or more carbon atoms.

7. A process as claimed in claim 6, wherein a compound of the formula 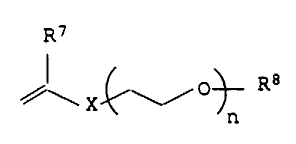 where
R⁷ is H or CH₃,
x is -O-, -COO-, -CONH- or -CH₂-,
R⁸ is C₁₂-C₂₂-alkyl and
n is from 1 to 100,
is used as the monoethylenically unsaturated monomer (e).

8. A process as claimed in claim 5, wherein the gel former used is a carboxyl-carrying polymer which is composed of
a) from 30 to 100% of at least one carboxyl-carrying monomer;
b) from 0 to 20% of at least one C₁-C₃₀-alkyl (meth)acrylate;
c) from 0 to 10% of at least one crosslinking agent and
d) from 0 to 70% of at least one further monoethylenically unsaturated monomer.

9. A process as claimed in claim 8, wherein the gel former used is a carboxyl-carrying polymer which is composed of
a) from 80 to 99.9% of acrylic acid, methacrylic acid or maleic anhydride;
b) from 0.05 to 10% of at least one C₈-C₂₂-alkyl (meth)acrylate;
c) from 0.05 to 5% of at least one crosslinking agent and
d) from 0 to 10% of at least one further monoethylenically unsaturated monomer.

10. A process as claimed in claim 9, wherein the gel former used is a carboxyl-carrying polymer which is composed of
a) from 90 to 99.4% of acrylic acid, methacrylic acid or maleic anhydride;
b) from 0.5 to 5% of a C₈-C₂₂-alkyl (meth)acrylate;
c) from 0.1 to 5% of at least one crosslinking agent and
d) from 0 to 5% of at least one further monoethylenically unsaturated monomer.

11. A process as claimed in claim 5, wherein the gel former used is a carboxyl-carrying polymer which is composed of
a) from 95 to 99.95% of acrylic acid, methacrylic acid or maleic anhydride and
b) from 0.05 to 5% of at least one crosslinking agent.

12. A process as claimed in claim 5, wherein the gel former used is a carboxyl-carrying polymer which is composed of
a) from 40 to 65% of maleic anhydride,
b) from 35 to 60% of at least one C₁-C₂₂-alkyl vinyl ether or of a C₆-C₃₀-alk-1-ene or isobutene,
c) from 0 to 5% of at least one crosslinking agent and
d) from 0 to 10% of at least one further monoethylenically unsaturated monomer.

13. A process as claimed in claim 5, wherein the gel former used is a carboxyl-carrying polymer which is composed of
a) from 40 to 85% of (meth)acrylic acid,
b) from 15 to 60% of at least one N-vinyllactam or of an acrylamide,
c) from 0 to 5% of at least one crosslinking agent and
d) from 0 to 10% of at least one further monoethylenically unsaturated monomer.

14. A process as claimed in any of claims 1 to 13, wherein a carboxyl-carrying polymer in which some or all of the carboxyl groups are present as carboxylate groups is used.

15. A process as claimed in any of the preceding claims, wherein the gel former is used in an amount of from 0.05 to 10, in particular from 0.1 to 5, particularly preferably from 0.1 to 2, % by weight, based on the total weight of the gel phase.

16. A process as claimed in any of the preceding claims, wherein the viscosity of the gel phase is at least 1000, in particular at least 1500, mPa.s.

17. A process as claimed in any of the preceding claims, wherein the polymer obtained is precipitated by adding water or a water-miscible solvent or an electrolyte.

18. A polymer dispersion obtainable by a process as claimed in any of the preceding claims.

## Revendications

1. Procédé pour la préparation de polymères insolubles dans l'eau par polymérisation radicalaire de monomères à insaturation éthylénique, caractérisé par le fait que l'on procède à la polymérisation dans une phase aqueuse gélifiée ayant une viscosité d'au moins 800 mPa.s, l'agent gélifiant ayant un poids moléculaire moyen supérieur à 20 000.

2. Procédé selon la revendication 1, caractérisé par le fait que l'on utilise en tant qu'agent gélifiant un polymère à groupes carboxyle d'origine synthétique.

3. Procédé selon la revendication 2, caractérisé par le fait que l'on utilise en tant qu'agent gélifiant un polymère à groupes carboxyle contenant des motifs choisis parmi les motifs d'acides carboxyliques aliphatiques à insaturation monoéthylénique en C3-C8, de leurs anhydrides ou de mélanges des acides carboxyliques et leurs anhydrides.

4. Procédé selon la revendication 3, caractérisé par le fait que l'on utilise en tant qu'agent gélifiant un polymère à groupes carboxyle contenant des motifs choisis parmi les motifs d'acide acrylique, d'acide méthacrylique, d'acide maléique, d'acide fumarique, d'acide itaconique, d'acide crotonique, d'anhydride méthacrylique ou d'anhydride maléique.

5. Procédé selon l'une des revendications 2 à 4, caractérisé par le fait que l'on utilise en tant qu'agent gélifiant un polymère portant des groupes acide carboxylique qui est constitué, en proportions en poids, de
a) 20 à 100 % d'au moins un monomère portant des groupes carboxyle ;
b) 0 à 80 % d'au moins un (méth)acrylate d'alkyle en C₁-C₃₀ ;
c) 0 à 10 % d'au moins un agent réticulant ;
d) 0 à 70 % d'au moins un autre monomère à insaturation monoéthylénique ; et
e) 0 à 25 % d'au moins un monomère à insaturation monoéthylénique miscible à l'eau à 25°C en proportions d'au moins 1 % en poids et qui contient au moins un groupe alkyle à 12 atomes de carbone ou plus.

6. Procédé selon la revendication 5, caractérisé par le fait que le polymère portant des groupes carboxyle est constitué de
a) 20 à 80 % d'au moins un monomère à groupes carboxyle ;
b) 20 à 80 % d'au moins un (méth)acrylate d'alkyle en C1-C30 ;
c) 0 à 1 % d'au moins un agent réticulant ;
d) 0 à 30 % d'au moins un autre monomère à insaturation monoéthylénique ; et
e) 0,5 à 15 % d'au moins un monomère à insaturation monoéthylénique miscible à l'eau à 25°C en proportions d'au moins 1 % en poids et qui contient au moins un groupe alkyle à 12 atomes de carbone ou plus.

7. Procédé selon la revendication 6, caractérisé par le fait que l'on utilise en tant que monomère à insaturation monoéthylénique e) un composé de formule 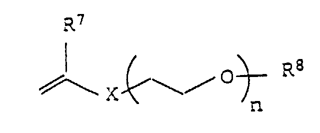 dans laquelle
R⁷ représente H ou CH₃,
X représente -O-, -COO-, -CONH- ou -CH₂- ;
R⁸ représente un groupe alkyle en C12-C22 ; et
n est un nombre allant de 1 à 100.

8. Procédé selon la revendication 5, caractérisé par le fait que l'on utilise en tant qu'agent gélifiant un polymère portant des groupes carboxyle et qui est constitué de
a) 30 à 100 % d'au moins un monomère portant des groupes carboxyle ;
b) 0 à 20 % d'au moins un (méth)acrylate d'alkyle en C1-C30 ;
c) 0 à 10 % d'au moins un agent réticulant ;
d) 0 à 70 % d'au moins un autre monomère à insaturation monoéthylénique.

9. Procédé selon la revendication 8, caractérisé par le fait que l'on utilise en tant qu'agent gélifiant un polymère à groupes carboxyle constitué de
a) 80 à 99,9 % d'acide acrylique, d'acide méthacrylique et/ou d'anhydride maléique ;
b) 0,05 à 10 % d'au moins un (méth)acrylate d'alkyle en C8-C22 ;
c) 0,05 à 5 % d'au moins un agent réticulant ;
d) 0 à 10 % d'au moins un autre monomère à insaturation monoéthylénique.

10. Procédé selon la revendication 9, caractérisé par le fait que l'on utilise en tant qu'agent gélifiant un polymère à groupes carboxyle constitué de
a) 90 à 99,4 % d'acide acrylique, d'acide méthacrylique et/ou d'anhydride maléique ;
b) 0,5 à 5 % d'un (méth)acrylate d'alkyle en C8-C22 ;
c) 0,1 à 5 % d'au moins un agent réticulant ; et
d) 0 à 5 % d'au moins un autre monomère à insaturation monoéthylénique.

11. Procédé selon la revendication 5, caractérisé par le fait que l'on utilise en tant qu'agent gélifiant un polymère à groupes carboxyle constitué de
a) 95 à 99,95 % d'acide acrylique, d'acide méthacrylique et/ou d'anhydride maléique et
b) 0,05 à 5 % d'au moins un agent réticulant.

12. Procédé selon la revendication 5, caractérisé par le fait que l'on utilise en tant qu'agent gélifiant un polymère à groupes carboxyle constitué de
a) 40 à 65 % d'anhydride maléique,
b) 35 à 60 % d'au moins un éther (alkyle en C1-C22)vinylique et/ou d'un alcène-1 en C6-C30 et/ou d'isobutène,
c) 0 à 5 % d'au moins un agent réticulant et
d) 0 à 10 % d'au moins un autre monomère à insaturation monoéthylénique.

13. Procédé selon la revendication 5, caractérisé par le fait que l'on utilise en tant qu'agent gélifiant un polymère à groupes carboxyle constitué de
a) 40 à 85 % d'acide (méth)acrylique,
b) 15 à 60 % d'au moins un N-vinyllactame et/ou acrylamide,
c) 0 à 5 % d'au moins un agent réticulant et
d) 0 à 10 % d'au moins un autre monomère à insaturation monoéthylénique.

14. Procédé selon une des revendications 1 à 13, caractérisé par le fait que l'on utilise un polymère à groupes carboxyle dont les groupes carboxyle sont en partie au moins à l'état de groupes carboxylate.

15. Procédé selon une des revendications qui précèdent, caractérisé par le fait que l'on utilise l'agent gélifiant en quantité de 0,05 à 10 %, plus spécialement de 0,1 à 5 % et, dans les meilleures conditions, de 0,1 à 2 % par rapport au poids total de la phase gel.

16. Procédé selon une des revendications qui précèdent, caractérisé par le fait que la viscosité de la phase gélifiée est d'au moins 1000 mPa.s et plus spécialement d'au moins 1500 mPa.s.

17. Procédé selon l'une des revendications qui précèdent, caractérisé par le fait que l'on précipite le polymère obtenu par addition d'eau ou d'un solvant miscible à l'eau ou d'un électrolyse.

18. Dispersion de polymère obtenue par un procédé selon l'une des revendications qui précèdent.
